# EUROPEAN PATENT APPLICATION

(11) **EP 4 414 895 A1**
(43) Date of publication of application: **14.08.2024**
(21) Application number: 23155568.1
(22) Date of filing: 08.02.2023
(51) Int. Cl.: G06N 3/063, G06N 3/0985, G06N 20/00, G06N 3/086

(54) **IMPROVED METHOD FOR TRAINING A HARDWARE METRIC PREDICTOR**

(71) Applicant: Robert Bosch GmbH, 70442 Stuttgart (DE)
(72) Inventor: Staffler, Benedikt Sebastian, 72072 Tuebingen (DE); Elsken, Thomas, 71069 Sindelfingen (DE); Metzen, Jan Hendrik, 71034 Boeblingen (DE)

(57) **Abstract**

Some embodiments are directed to training a hardware metric predictor. The hardware metric predictor being configured to receive as input a query description of a neural network architecture and to produce as output a predicted hardware metric predicted to be incurred by a neural network corresponding to the query description when run on the target hardware. Method may include giving as training input a number of input/output pairs of a given training function.

## Description

### Technical Field

The presently disclosed subject matter relates to a training method for training a hardware metric predictor, a neural network design method, a neural network method, a computer readable medium, a system, a dishwasher.

### Background

Often when designing a technical system, it is needed to estimate the technical performance of the system early. Predicting hardware costs, e.g., as measured in hardware metrics such as energy consumption, latency, or memory use, of a neural network on a given hardware device, is especially challenging. Neural networks are increasingly used for control of a technical system. For example, based on the sensor values of one or more sensors, and possibly taking various further factors into account, a neural network may compute a control signal for controlling the technical system. Often, such a network will be executed on embedded hardware. In such a situation, it is important to stay within the limits imposed by the hardware.

The most accurate estimate of hardware costs is to actually measure the relevant metric on the target hardware. Unfortunately, this is impractical for various reasons. Development typically is not performed on the target hardware, which may not even be locally available. Even if the target hardware is present, performing a measurement necessitates a compile, upload, and test cycle for each neural network architecture under consideration. This testing is time-consuming and costly. For the purpose of automated neural network design, this approach is fully impracticable.

Another approach to estimating hardware cost is to use a simulator of the target hardware. This is also problematic, as simulators are not always available, or access to them may be restricted. Even if simulator results are available, their accuracy is not always sufficient. Accurate hardware metrics require a low level of simulation, which is not always done in simulators.

Yet another approach to predict hardware metrics is to train a machine learnable model to predict the relevant hardware metric given a neural network architecture as input. This is not straightforward though. Hardware metrics are determined by non-obvious and non-linear factors that depend on hardware specifics. As a result, a large amount of training data is required. Experiments confirm that proxies such as the number of FLOPs, or the number of parameters may not correlate sufficiently to the hardware metrics. Furthermore, hardware-specific costs do not correlate well across hardware platforms.

The paper `What to expect of hardware metric predictors in NAS', by Kevin A. Laube, et al., gives an overview of conventional machine learnable hardware metric predictors. The technologies considered include lookup tables, gradient-boosted trees, and neural networks. Neural network-based prediction models are found to perform best, but they require substantial amounts of training data for the target hardware. In situations where such large amounts of data are available, this may be a good solution, but unfortunately, for many types of hardware it is impracticable, time-consuming, and expensive to collect such training data.

### Summary

There is a desire to improve prediction of hardware metrics representing the costs of running a particular neural network architecture on target hardware. Moreover, there is especially a need to obtain said prediction using few measurements on the target hardware.

In an embodiment, a neural network is trained on data representing a suitable prior to make hardware metric predictions. This allows few-shot predictions for a novel hardware target, given only a modest set of measurement available for the target hardware. This approach addresses the problem of requiring a large amount of training data to fit a machine learnable model.

For example, once trained, at inference, the hardware metric predictor may be configured to receive as input a query description of a neural network architecture, and to produce as output a predicted hardware metric predicted to be incurred by a neural network corresponding to the query description when run on the target hardware.

As the hardware metric predictor may not have seen any training data during its training that was actually obtained at the target hardware, the hardware metric predictor is provided with additional information. For example, the hardware metric predictor may be configured to receive as input a ground truth set. The ground truth set comprises a number of pairs, each pair comprising a ground truth description of a neural network architecture and a ground truth hardware metric incurred by a neural network corresponding to the ground truth description when run on the target hardware.

The trained hardware metric predictor is configured to determine from the ground truth set how the hardware metric likely relates to the neural network that incurred the metric, and to apply the inferred relationship to the query description at the input.

To train the hardware metric predictor, training input is generated. Instead of the ground truth set, a training input comprises multiple pairs of an input and a corresponding output of a training function. All pairs in a given training input are computed with the same training function. The training function takes as input a description of a neural network architecture and produce as output a value dependent upon said input. In addition, a further input is generated, which is also a neural network architecture description. The hardware metric predictor is trained to produce as output a prediction of the training function output for the further input, using the same training function as was used for the pairs. Accordingly, broadly speaking, the hardware metric predictor learns how establish what relation exists between an output value and a neural network architecture description input. This relation is applied to the further input to produce the prediction.

For example, at inference, the model input may comprise multiple neural network configurations together with their hardware cost, and one or more additional network configuration for which hardware cost is to be predicted. In a typical training stage only examples from the prior are seen by the model. But at inference a few real hardware cost examples are presented.

A suitable choice for the hardware metric predictor is a neural network, in particular a transformer neural network. Another advantage of using training function is that they allow training data to be obtained easily, thus allowing the training of powerful and large model.

A trained hardware metric predictor may be used in a neural network design method. For example, the hardware metric of multiple candidate neural network architectures may be predicted with a hardware metric predictor trained according to an embodiment. A candidate neural network architectures with desirable metric(s) may then be selected.

The selected neural network architecture may be instantiated, e.g., populated with random parameters, and conventionally trained. Automated neural network design coupled with target hardware prediction is especially useful for embedded applications, e.g., computation of a control signal by a neural network on embedded hardware.

For example, sensor values may be obtained from one or more sensors combined with a controllable technical system. A neural network may be applied to at least said sensor values to obtain a control parameter for controlling the controllable technical system. As an example, a dishwasher comprising at least a turbidity sensor, may store a neural network designed according to an embodiment. The neural network is applied at least to value(s) measured by the turbidity sensor and produces at least one of a time and temperature of a cleaning process of the dishwasher. Instead of a dishwasher, a neural network may be employed in many systems, not only household appliances, but also power tools, cameras, and the like.

Predicting hardware metrics is also suitable for finding faults in a system employing a neural network. If measured hardware metrics differ from predicted hardware metrics, the system may be at fault. For example, some bug may decrease throughput of a neural network below what is expected from prediction.

An embodiment of a method of training a hardware metric predictor, a method of hardware metric prediction, and method of designing a neural network architecture, a neural network method, a neural network debugging method, may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

### Brief Description

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a training device for training a hardware metric predictor, and a hardware metric predictor,
Figure 1b schematically shows an example of an embodiment of a neural network design device, and a neural network device,
Figure 2a schematically shows an example of an embodiment of an inference input,
Figure 2b schematically shows an example of an embodiment of a training input,
Figure 2c schematically shows an example of an embodiment of training a hardware metric predictor,
Figure 2d schematically shows an example of an embodiment of a training input,
Figure 3 schematically shows an example of an embodiment of a training method for a hardware metric predictor,
Figure 4a schematically shows a computer readable medium having a writable part comprising a computer program according to an embodiment,
Figure 4b schematically shows a representation of a processor system according to an embodiment.

### Reference signs list

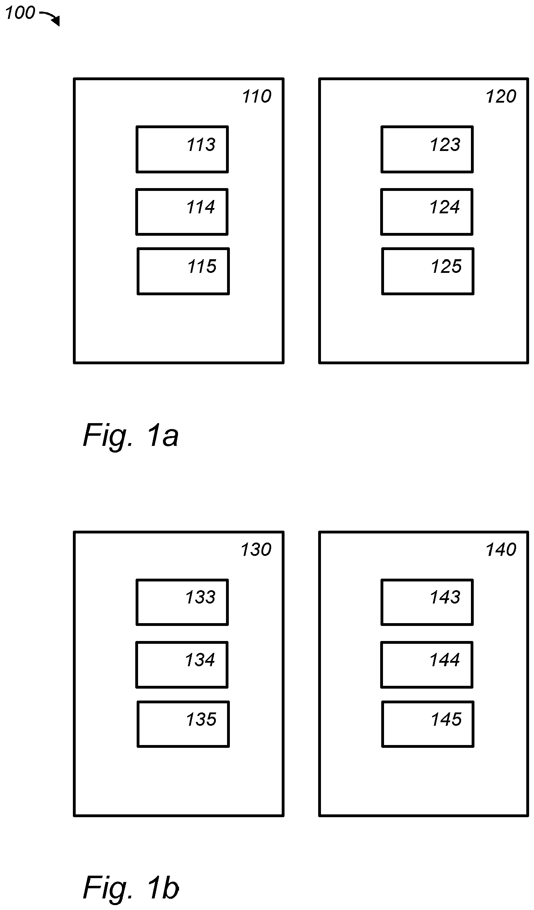

The following list of references and abbreviations corresponds to figures 1-2d, and is provided for facilitating the interpretation of the drawings and shall not be construed as limiting the claims.
- 100: a hardware predictor training system
- 110: a training device for training a hardware metric predictor
- 113: a processor system
- 114: storage
- 115: communication interface
- 120: a hardware metric predictor
- 123: a processor system
- 124: a storage
- 125: a communication interface
- 130: a neural network design device
- 133: a processor system
- 134: a storage
- 135: a communication interface
- 140: a neural network device
- 143: a processor system
- 144: a storage
- 145: a communication interface

- 400: a training item
- 401: training the hardware metric predictor
- 410: multiple input/output pairs of a given training function
- 411, 414: a pair
- 412, 415: an input
- 413, 416: an output
- 421: a further input
- 422: an output corresponding to the further input
- 430: a hardware metric predictor training input

- 450: multiple different training functions,
- 451-453: a training function
- 459: a training function
- 440: a sampler
- 460: a hardware metric predictor
- 423: actual result of hardware metric predictor
- 424: training signal

- 470: simulate or measured hardware metrics
- 480: a ground truth set
- 487: a query description of a neural network architecture
- 481, 484: a ground truth pair
- 482, 485: a ground truth description of a neural network architecture
- 483, 486: a ground truth hardware metric
- 488: a hardware metric predictor input

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### Detailed Description

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them. Further, the subject matter that is presently disclosed is not limited to the embodiments only, but also includes every other combination of features described herein or recited in mutually different dependent claims.

**Figure 1a** schematically shows an example of an embodiment of a training device 110 for training a hardware metric predictor, and a hardware metric predictor 120. Training device 110 and hardware metric predictor 120 together form a hardware predictor training system 100.

The hardware metric predictor 120 is configured to receive as input a query description of a neural network architecture and a ground truth set. The ground truth set comprises a number of pairs, each pair comprising a ground truth description of a neural network architecture and a ground truth hardware metric incurred by a neural network corresponding to the ground truth description when run on the target hardware. The hardware metric predictor is configured to produce as output a predicted hardware metric predicted to be incurred by a neural network corresponding to the query description when run on the target hardware. Examples of hardware metrics include: memory usage, energy consumption, and latency.

Training device 110 is configured to train hardware metric predictor 120. Interestingly, the training of hardware metric predictor 120 need not use data from the target hardware. Instead, the hardware metric predictor 120 is learnt to predict relevant metrics from a set of examples. At interference time the ground truth set is given as part of the input which allows the trained predictor to extrapolate the ground truth set to predict the metric for the query.

**Figure 1b** schematically shows an example of an embodiment of neural network design device 130, and a neural network device 140. The automated selection of neural network architectures is one of the applications of a hardware metric predictor.

Neural network design device 130 may comprise the hardware metric predictor 120, and may be used to find a suitable neural network for a given target hardware device. The predictor predicts the hardware costs of a neural network, and this prediction is then used by the design device.

Neural network design device 130 is configured to sample multiple candidate neural network architectures, and to predict the hardware metric of the multiple candidate neural network architectures with a hardware metric predictor, e.g., hardware metric predictor 120. Other selection variables may be computed. For example, an accuracy metric predictor may be used to predict an accuracy metric for the multiple candidate neural network architectures, e.g., indicating how well the candidate network is likely to perform on a desired task. Given the predicted hardware metric and optional other variables, e.g., accuracy, a network architecture may be selected. For example, the variables may be weighted and an optimal value chosen. Methods to compute accuracy metrics are known in the art.

Neural network device 140 is a device that comprises a neural network with an architecture chosen by design device 130, using the trained hardware metric predictor 120. Neural network device 140 may itself be trained, e.g., using conventional methods. Neural network device 140 is advantageous as it allows networks that perform a task efficiently within a hardware metric target, e.g., execution speed, while reaching other variables, e.g., accuracy.

Neural network device 140 may be configured to obtain sensor values from one or more sensors combined with a controllable technical system. Neural network device 140 may be configured to apply the neural network to the obtained sensor values, the neural network being designed by the neural network design device 130. The neural network is configured to produce a control parameter for controlling the controllable technical system. The controllable technical system is configured to apply the control parameter to control the controllable technical system.

For example, the neural network may be comprised in embedded computation hardware of the controllable technical system. The system may, e.g., be any one from the group: a smart sensor, a camera, a domestic appliance, and a power tool.

For example, a smart sensor may be a device that takes input from the physical environment, e.g., sensor values measured by one or more sensors, and uses built-in compute resources to perform predefined functions upon detection of specific input and then process data before passing it on. A domestic appliance is also referred to as a household appliance, e.g., a machine which assists in household functions such as cooking, cleaning and food preservation. A power tool is a tool that is actuated by an additional power source and mechanism other than the solely manual labor used with hand tools. Power tools are used in industry, in construction, in the garden, for housework tasks such as cooking, cleaning, and around the house for purposes of driving fasteners, drilling, cutting, shaping, sanding, grinding, routing, polishing, painting, heating and more.

As an example, neural network device 140 may be a dishwasher comprising a turbidity sensor, e.g., an optical turbidity sensor. A neural network designed by a neural network design device is configured to receive at least a value measured by the turbidity sensor and to produce at least one of a time and temperature of a cleaning process of the dishwasher, the dishwasher being configured to use the generated time and/or temperature of the cleaning process. Accordingly, a better system is obtained, in this case a better dishwasher; because neural network performance can be predicted better for the embedded hardware, e.g., processor system, memory system, and the like, a more suitable choice for the neural network may be made, resulting in better control of the dishwasher and/or lower hardware requirements.

Hardware metric predictor 120 may also be employed to check neural network device 140 for faults. For example, neural network device 140 may be programmed to measure and record hardware metrics during execution of its program. If the measured hardware metrics are significantly different from the metrics predicted by hardware metric predictor 120, then this may be indicative of a fault in neural network device 140.

Training device 110 may comprise a processor system 113, a storage 114, and a communication interface 115. Hardware metric predictor 120 may comprise a processor system 123, a storage 124, and a communication interface 125. Design device 130 may comprise a processor system 133, a storage 134, and a communication interface 135. Neural network device 140 may comprise a processor system 143, a storage 144, and a communication interface 145.

In the various embodiments of communication interfaces 115, 125, 135, and/or 145, the communication interfaces may be selected from various alternatives. For example, the interface may be a network interface to a local or wide area network, e.g., the Internet, a storage interface to an internal or external data storage, an application interface (API), etc.

Storage 114, 124, 134, and 144 may be, e.g., electronic storage, magnetic storage, etc. The storage may comprise local storage, e.g., a local hard drive or electronic memory. Storage 114, 124, 134, and 144 may comprise non-local storage, e.g., cloud storage. In the latter case, storage 114, 124, 134, and 144 may comprise a storage interface to the non-local storage. Storage may comprise multiple discrete sub-storages together making up storage 114, 124, 134, and/or 145. Storage may comprise a volatile writable part, say a RAM, a non-volatile writable part, e.g., Flash, a non-volatile non-writable part, e.g., ROM.

Storage 114, 124, 134, and 144 may be non-transitory storage. For example, storage 114, 124 and 134 may store data in the presence of power such as a volatile memory device, e.g., a Random Access Memory (RAM). For example, storage 114, 124, 134, and 144 may store data in the presence of power as well as outside the presence of power such as a non-volatile memory device, e.g., Flash memory.

The devices 110, 120, 130, and 140 may communicate internally, with each other, with other devices, external storage, input devices, output devices, and/or one or more sensors over a computer network. The computer network may be an internet, an intranet, a LAN, a WLAN, etc. The computer network may be the Internet. The devices 110, 120, 130, and/or 140 may comprise a connection interface which is arranged to communicate, e.g., with each other, e.g., as part of training or configuring, etc., or with other devices. Devices 110 and 120 may be configured to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G, or 5G antenna. A connection interface may be arranged to receive sensor values from one or more sensors.

The communication interface 115 may be used to send or receive digital data, e.g., training updates of parameters of a hardware metric predictor's neural network, e.g., training functions and/or other training data. The communication interface 125 may be used to send or receive digital data, e.g., ground truth data, query descriptions, etc. The communication interface 135 may be used to send or receive digital data, e.g., resource budget of a target neural network and/or accuracy budget for the target neural network, and a neural network architecture description. The communication interface 145 may be used to send or receive digital data, e.g., sensor values, control data, etc.

The execution of devices 110, 120, 130, and 140 may be implemented in a processor system. The devices 110, 120, 130, and 140 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110, 120 and 130 may comprise multiple processors. A processor circuit may be implemented in a distributed fashion, e.g., as multiple sub-processor circuits. For example, devices 110, 120, 130, and/or 140 may use cloud computing.

Typically, the training device 110, hardware metric predictor 120, and design device 130, neural network device 140, each comprise a microprocessor which executes appropriate software stored at the device; for example, that software may have been downloaded and/or stored in a corresponding memory, e.g., a volatile memory such as RAM or a non-volatile memory such as Flash. Instead of using software to implement a function, the devices 110, 120, 130, and/or 140 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, training device 110, hardware metric predictor 120, design device 130, and neural network device 140 may comprise circuits, e.g., for cryptographic processing, and/or arithmetic processing. In hybrid embodiments, functional units are implemented partially in hardware, e.g., as coprocessors, e.g., neural network coprocessors, and partially in software stored and executed on the device.

Below an exemplifying embodiment is detailed for estimating hardware costs, e.g., denoted as, *c*(*N*), of a neural network, e.g., denoted as *N*, on a given hardware device. There are various hardware metrics that a skilled person is interested in. A neural network needs to be arranged conscious of the technical capabilities of the target hardware. For example, a hardware metric may be, e.g., memory usage, energy consumption, and latency. When designing a neural network, a skilled person may have to take into account a hardware budget allotted for the neural network. For example, the neural network needs to produce its responses within a given time, or needs to fit in a particular amount of memory, and so on. Predicting these metrics without actually running the neural network on the target hardware turns out to be surprisingly hard. Measuring the hardware cost on the actual hardware is often expensive, and time-consuming, even when a simulator is available--which often there is not, or not one of sufficient accuracy. Although neural networks can be trained for this prediction task, conventional approaches need a prohibitive amount of training data.

In an embodiment, a neural network is prior-data fitted. In a learning phase, a hardware metric predictor is trained on a large amount of training data, *D*(*i*). The training data is preferably artificially generated from a data generating distribution p(D). Once this training phase is finished, one can obtain predictions on a new but related data set with relatively little training data points. Training on generated training data is sometimes referred to a meta-training using meta-data.

A transformer neural network architecture is particularly well suited for this hardware metric predictor, but this is not necessary and other machine learning approaches may be used. For example, the transformer model disclosed in `Transformers can do Bayesian inference', by Samuel Müller, et al., (included herein by reference) is a suitable choice for creating a hardware metric predictor, see, e.g., section 3 of this paper. Due to the learning phase, the amount of training data on the target hardware device required for accurately predicting the hardware-costs can be reduced.

Interestingly, instead of the conventional supervised learning approach for hardware metric prediction, the problem is transformed into a few-shot learning problem.

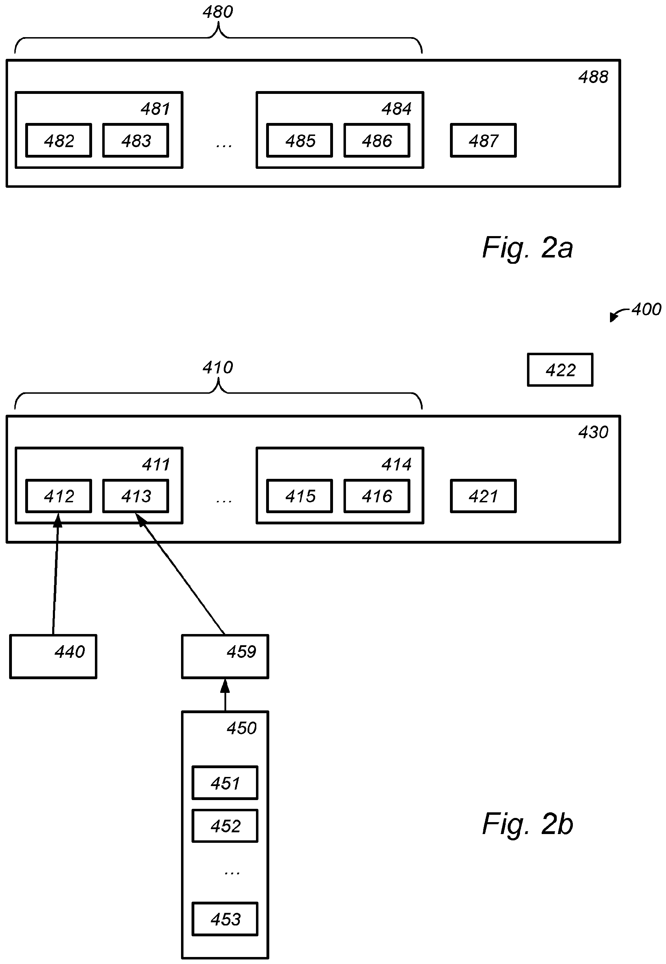

**Figure 2a** schematically shows an example of an embodiment of an inference input 488. The inference input 488 would be used as an input, after the hardware metric has been trained. Shown in figure 2a, the inference input 488 comprises a ground truth set 480, and a query description of a neural network architecture 487.

The hardware metric predictor is configured to produce as output a predicted hardware metric predicted to be incurred by a neural network corresponding to the query description when run on the target hardware. There are various ways in which a neural network architecture may be encoded. For example, this may be done as a sequence of architectural parameters, e.g., indicating the type and number of neural nodes, and how they are connected. A discussion of various ways of encoding a neural network architecture is discussed in the paper 'A Study on Encodings for Neural Architecture Search', by Colin White, et al., (included herein by reference). Other examples may be found in the paper `Latency-Aware Differentiable Neural
Architecture Search', (included herein by reference).

Neural network architecture descriptions may be implemented with higher or lower levels of details. For example, on the detailed end, a neural network architecture description may be the same as the neural network itself, except that parameter values are not specified. For example, on the high-level end, a neural network architecture description may comprise high-level type and size indication of high-level features, e.g., of layers of a particular type. For example, a high-level feature may indicate a convolution layer, indicating the number of filters and their sizes. Lower level description has the advantage of allowing a low-level search for an optimal neural network architecture, whereas a higher level description is faster and smaller. Both descriptions are sufficient however to specify a neural network, e.g., to a neural network training device.

In an embodiment, the hardware metric predictor is trained, without the predictor having encountered any actual metrics of the target hardware. To allow the hardware metric predictor to nevertheless make predictions for the target hardware, the predictor is provided, at inference time, with a ground truth set. The ground truth set comprises a number of pairs, each pair comprising a ground truth description of a neural network architecture and a ground truth hardware metric incurred by a neural network corresponding to the ground truth description when run on the target hardware. Shown in figure 2a are ground truth pairs 481 and 484. Each of the pairs comprises a ground truth description of a neural network architecture, and a ground truth hardware metric. Shown in figure 2a, pair 481 comprises neural network architecture description 482 and ground truth hardware metric 483; and pair 484 comprises neural network architecture description 485 and ground truth hardware metric 486. The ground truth metrics 483 and 486 were obtained on the same target hardware, and measure the same hardware metric, albeit for a different neural network architecture.

**Figure 2b** schematically shows an example of an embodiment of a training item 400. The training item comprises a hardware metric predictor training input 430, and an expected result 422, that the hardware metric predictor is trained to produce given input 430. The training items may be generated.

To generate a training item use is made of multiple different training functions 450. Shown in figure 2b are training functions 451, 452 and 453. In an embodiment, there may be more than 3 training functions. As training functions could be parametrized, their number may in essence be unlimited. To generate training input 430, one training function is selected from multiple 450. In figure 2b, the selected training function is function 459. The multiple training functions are used to generate different training items. One training function may be used to generate many training items; though one could limit the number of training items generated from a training function. Especially for parametrized training functions, the number of training items to a specific instantiation of a parametrized training function may be as low as 1.

The training functions are configured to receive as input a training description of a neural network architecture and generate as output a value dependent upon said input. Superficially, the training functions are similar to a hardware metric predictor in that they receive as input a neural network architecture description, e.g., like query description 487, and produce a value in response. It should be emphasized however, that there are no requirements on the training functions to produce the actual hardware metric or to even approximate it; optional fine-tuning the hardware metric predictor or measured hardware metrics or on values correlated therewith may be beneficial though.

Given the training function, in the shown example, training function 459, input/output pairs are generated for training input 430. Shown are pairs 411 and 414. Multiple neural network architecture descriptions are generated: in this example, neural network architecture descriptions 412 and 415 are generated. For example, a sampler 440, e.g., an algorithm, may be configured to generate neural network architectures. Preferably, the generated architectures are both realistic and varied. Training function 459 is applied to the generated architectures, e.g., architectures 412 and 415 to produce output values, e.g., output values 413 and 416, respectively. The set of pairs generated during the training has a similar function as the ground set has during inference.

Sampler 440 may use a database of common neural network architectures. For example, sampler 440 may select from the database, e.g., randomly, or cyclically, or the like. Sampler 440 may generate a randomized description, e.g., using a Markov chain; nodes in the Markov chain representing neural network nodes, or larger features, e.g., layers, filters, and the like; edges between the nodes allowing the Markov chain to string these features together. Sampling neural network architectures may be done using a machine learning approach. For example, given a training set of neural network architectures a GAN may be trained to generate a neural network architecture given a random input, e.g., a noise value.

One particular way for generating neural networks that works well in practice, e.g., for sampler 440, is to start with one or more randomly generated and/or manually chosen architectures, and to apply mutations to the start architectures and/or previously generated architectures. For example, one may use the evolutionary neural architecture search algorithms from the paper "Large-Scale Evolution of Image Classifiers", by Esteban Real, at al. For example, the mutations listed in section 3.2 of that paper may be applied to generate neural architectures.

The number of pairs in ground truth set 480 or the number of pairs in the training set 410 may be fixed, or may vary. Allowing varying number of pairs has advantages as it allows hardware metric production with a number of ground truth values that is not known beforehand. Transformer neural networks are well suited to receive a varying number of pairs. On the other hand, using a fixed number of pairs has the advantage that other machine learning approaches can be more easily adapted for an embodiment. For example, a neural network, e.g., a deep neural network may be trained to receive a fixed number of input pairs.

A further input 421 is also generated, as well as an output 422 corresponding to the further input. The further input is also a description of neural network architecture, and may also be generated by sampler 440. Output 422 is obtained by applying training function 459 to description 422.

The ground truth set may comprise much fewer pairs than would be needed to train a conventional neural network. For example, the ground truth may comprise fewer than 1000 pairs, or fewer than 100 pairs, or fewer than 50 pairs. The number of pairs used in a training item, is preferably of the same order as the number of ground truth pairs that will be used in inference. Preferably, the number of pairs is varied in training.

Many training items 400 may be generated, e.g., by varying training function 459, the number of input pairs, and/or the training descriptions. The generated training items are used to train the hardware metric predictor. Colloquially, the hardware metric predictor learns to estimate an unknown function for neural network architectures, given a set of examples. When at inference, an actual ground truth set is presented, the hardware metric predictor has learned to estimate how the ground truth metrics relate to their neural network architectures, and will apply the estimated function to the query input.

It is possible for the training functions to allow more varied input data than only neural network architectures. In this case, the predictor will learn more generally to estimate and apply functions. However, in an embodiment, the training function is configured to receive as input a description of a neural network architecture; also the further input comprises a further description of a neural network architecture. Restricting the input of the training functions, e.g., inputs 412, 415, 421, aligns better with the inputs that are expected during actual inference, e.g., inputs 482, 485, and 487.

Generating the training items may be optimized as follows. A sampler may be used to generate a pool of multiple training descriptions of a neural network architecture. The size of this pool is larger than the number of pairs used in a training item. A training function is applied to each of the architectures in the pool. In effect, training pairs are thus precomputed. This can be offloaded to another computation device. Generating a training item can now be done by repeatedly selecting a number of pairs from the pool. This approach is especially efficient if a training function is reused for multiple training items. The number of selected training pairs may vary between generated training items.

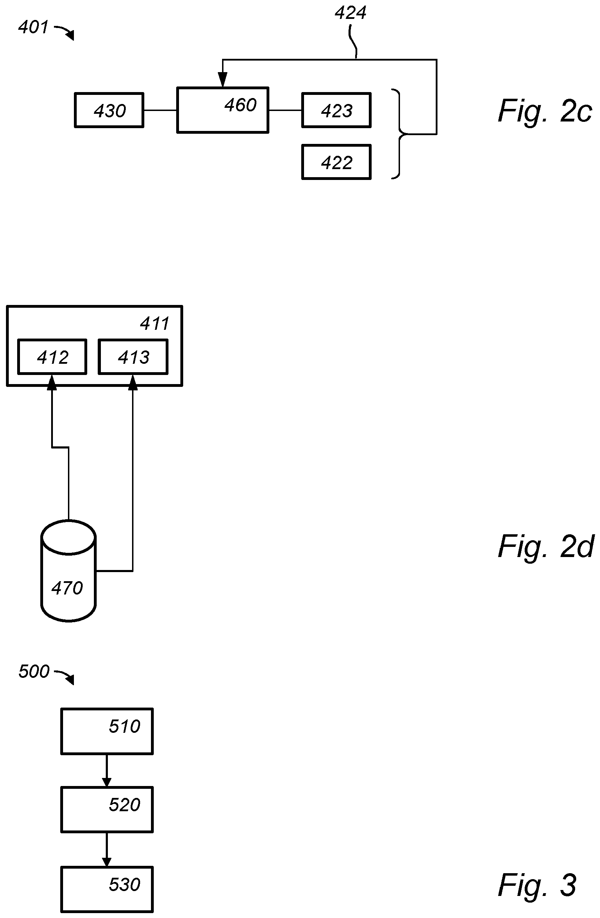

**Figure 2c** schematically shows an example of an embodiment of training 401 a hardware metric predictor 460. Shown in figure 2c, a training item 430 is provided to a hardware metric predictor 460. The hardware metric predictor 460 will produce a result 423. A training signal 424 is derived from the produced result 423 and the desired response 422. For example,
the produced result 423 is compared with the desired response 422, and a training signal 424 is derived to cause a future produced result to be closer to the desired response. Other factors may be taken into account to compute signal 424, e.g., input 430. The training signal is applied to predictor 460. By repeatedly applying training signals obtained from a large set of training items, the hardware metric predictor is trained. Note that during this part of the training no actual hardware metric measurements are needed--although this is not precluded. Neural network training may, e.g., be done using Adam.

Below various training functions are described that may be used to train the hardware metric predictor.

### Training functions

Preferably, training functions are selected that seem reasonable in the context of hardware cost prediction. For example, at least one of the training functions is a parameter-free model applied to the training description of the neural network architecture. For example, commonly used proxy for estimating hardware cost may be used as training functions.

Possible, training functions for a neural network architecture N include:
- Number of parameters in N
- Number of multiply-accumulate operations, or MACs, in N
- Number of activations in N
- number of layers of the neural network architecture,
- number of layers of the neural network architecture of a particular type, e.g., fully connected, convolutional, ReLu, etc.,
- and any combination of the above

A combination of the above proxies may be any function of them. The combination of the above may be a linear combination, but may also be more complex non-linear combination, e.g., a multivariate polynomial function.

For example, a set of random neural network descriptions may be generated, and for some training items, the expected metric to compute may be the number of parameters, while for other it is the number of layers. Accordingly, the predictor learns to recognize from multiple pairs what the unknown relationship may be and computes it. Once provided with an actual ground truth set, it is conditioned to combine factors of a neural network architecture to produce a value dependent on the neural network architecture.

The training functions may also be parametrized. A parametrized training function may directly apply to the neural network architecture description, but may also combine non-parametrized training functions indicated above. For example, a training function may be a weighed sum of factors, such as, the number of nodes and the number of layers. The parametrization may be selected randomly. To optimize selection, the multiple non-parametric values may be computed for a pool of neural network architectures, so that a parametrized function may quickly be computed from the precomputed values without having to repeatedly generated architectures or compute the non-parametrized values.

In addition to linear weighting, parametrized training function may be a parametrized class of polynomials, and/or a parametrized class of neural networks, and/or a parametrized class of graph neural networks. An advantage of parametrized training functions is that they increase diversity. Parameters may be randomly selected.

In an embodiment, a training function is a neural network, in particular, a graph neural network. The parameters of the neural network may be randomly sampled. Neural network are capable of approximating a large class of functions, so that randomly sampled neural networks provide a large amount of variety. For example, a neural network may be encoded at a high level, e.g., as a sequence of layer sizes, resulting in an n-dim vector x. Other parameters may be added to the vector if desired, e.g., parameters such as computed above. This vector x may then be used as the input for some parameterizable function, e.g., a polynomial or a neural network.

In an embodiment, a neural network architecture N comprises a list of layers *l*₁, ... , *lₖ.* With *l*₁, ... , *lₖ* we directly denote an encoding of the layer, e.g., a one-hot or random encoding, or also an encoding as above, or as in the cited papers. A class of parameterizable functions *h* may be applied on each layer *l* separately rather than on the entire neural network *N*. A training function may then be obtained as a sum of layer-wise hardware-costs. Hardware cost for a layer may be computed as disclosed herein, e.g., as a polynomial of a layer *l*, e.g., its size.

Interactions between two or more layers may be modelled by adding terms for the connection between layers.

The previously proposed function classes all model continuous functions. However, hardware costs are not necessarily a continuous function of the neural network architecture. Costs may be a piecewise continuous function, having a finite number of discontinuities. For example, costs may increase non-continuously once a network's parameters exceed a cache size of the target hardware. Part of the training functions may be discontinuous functions, which trains the predictor that this behavior is possible. For example, a training function may be a piecewise continuous function. Splines may be used to model the continues parts, which may be connected through a set of discontinuities.

**Figure 2d** schematically shows an example of an embodiment of part of a training input. Shown in figure 2d is one of the pairs 411 that are used in a training input 430. Multiple pairs may be generated in the same fashion to create full training items. Instead of using training functions based on a mathematical description, a training function may instead be based on a lookup function. A database 470 is provided comprising a collection of neural network architectures and a corresponding relevant metric. This may be the same metric as the target metric for the hardware metric predictor, but this is not necessary.

In an embodiment, database 470 comprises metric for a set of neural network architectures obtained from hardware simulation. Hardware simulation is not necessarily better than metrics predicted by a trained neural network, nevertheless, when hardware simulated values are available, they are a good source of training material. Even if the relationship between actual hardware metrics and simulated one's is less than perfect, it remains the case that simulated hardware metrics may be derived from the neural network architecture. Learning to estimate that relationship is likely to improve prediction of hardware metrics from the ground truth set as well.

The hardware simulation may be a simulation of the target hardware, but this is not necessary. Furthermore, the database may comprise simulations of multiple types of hardware. A pair, like pair 411 may be obtained by selecting from the database a neural network architecture and corresponding metric obtained from simulation. Multiple such pairs may be combined in a training item. The further input and the corresponding output may also be selected from the database. The pairs, further input and corresponding output for a training item correspond to the same target hardware.

Instead of simulating the neural networks, they may also be run on some hardware, and metrics, e.g., latency, memory use, etc., may be measured. For example, such values may be collected for platforms that are easily compiled for, e.g., for a CPU, or a GPU. Again, note that it is not necessary to obtain these values for the actual target hardware. The target hardware may be defined for the hardware metric predictor by the ground truth set, accordingly training on hardware measurements for a different hardware target is good training.

In an embodiment, training is done first on mathematically defined training functions. After this, fine-tuning may be done on simulated data and/or measured data, possibly from the target hardware, but also from non-target hardware.

Finally, if the amount of data available for the target hardware is large, but not large enough to train a conventional neural network, the data may be used for fine-tuning as well. It should be emphasized, that training on data obtained from the actual target hardware is not required though.

A trained hardware metric predictor may be used in various applications. An example application is automated neural network design, sometimes referred to as AutoML. Automated architecture search can substantially speed up the development of new deep neural network application as skilled persons do not need to painstakingly evaluate different architectures. Hardware metric are among the important design criterion when designing a new neural network. For example, latency, memory use, and memory use frequently need to be controlled. For example, a neural network to control, say, a camera, or to improve its output, needs to work within an energy budget, as it would otherwise drain batteries to fast. Likewise, latency needs to be controlled, otherwise a user may need to wait too long. Finally, size of the network may be restricted in some settings as well. None of these values are straightforward to estimate, however.

In addition to hardware metric other desired features may need to be taken into account, in particular accuracy. This is not necessary, for example, a valid question may be, to find the largest possible neural network, e.g., of a particular type, that fits in a hardware metric budget. Nevertheless, accuracy is a valid factor to consider. Evaluation accuracy does not need to be measured on the target hardware. Instead, accuracy may be evaluated on a prototype neural network on any suitable fast platform, e.g., a GPU. Moreover, conventional accuracy estimators are available, which may be used.

For example, the neural network design method may comprise
- sampling multiple candidate neural network architectures,
- predicting relevant factors for the multiple candidate neural network architectures, including at least one hardware metric, and possibly an accuracy metric,
- selecting a neural network architecture from the multiple candidate neural network architecture using the predicted relevant factors. For example, a merit score may be computed from the relevant factors, e.g., their (weighed) sum, or some other merit function.

Sampling the candidates may be random, e.g., using sampler 440. Sampling may also be based on previous results, e.g., hardware metric and/or other factor evaluated so far. For example, the sampling may use a genetic search, simulated annealing or the like.

Automated searching for neural networks is especially useful for embedded hardware applications, as here hardware metrics are frequently limited, often on multiple dimensions, e.g., latency and energy consumption. At the same time, there is the need to get the neural network sufficiently accurate, despite the restraints.

After the neural network is selected by the neural network design method it may be trained in a conventional manner, and may then be deployed in a neural network method. For example, the method may comprise
- obtaining sensor values from one or more sensors combined with a controllable technical system,
- applying the neural network to the obtained sensor values, the neural network being configured to produce a control parameter for controlling the controllable technical system
- the controllable technical system being configured to apply the control parameter to control the controllable technical system.

For example, the neural network may be comprised in embedded computation hardware of the controllable technical system.

Another application of the hardware metric predictor is in neural network debugging. Due to the high complexity of modern computer programs, faults are easily introduced therein. One of the challenges facing a skilled person in modern system design is in determining if a system works correctly or if the system contains faults that need correction. It is not always directly apparent whether a fault is present. A trained hardware metric predictor may be helpful in this case.

For example, in a neural network debugging method, a hardware metric for a neural network architecture running on the target hardware may be measured. The measured hardware metric may be compared with a predicted hardware metric. If the hardware metric as measured differs, especially if the difference is large, e.g., exceed a threshold, this is indicative of an anomaly. For example, if the actual neural network is much slower than predicted, then likely there is a fault in the system that slows the neural network down. Without the hardware metric predictor, the skilled person does not know if a slow neural network is to be expected or if that is the anomaly.

**Figure 3** schematically shows an example of an embodiment of a training method (500) for training a hardware metric predictor.

The hardware metric predictor is configured to receive as input a query description of a neural network architecture and a ground truth set, the hardware metric predictor being configured to produce as output a predicted hardware metric predicted to be incurred by a neural network corresponding to the query description when run on the target hardware, the ground truth set comprising a number of pairs, each pair comprising a ground truth description of a neural network architecture and a ground truth hardware metric incurred by a neural network corresponding to the ground truth description when run on a target hardware

Method (500) comprises
- obtaining (510) multiple different training functions, a training function receiving as input a training description of a neural network architecture and generating as output a value dependent upon said input,
- iterating (520) over the multiple different training functions to train the hardware metric predictor, comprising
- given a training function for training the hardware metric predictor, training (530) the hardware metric predictor to, given as training input a number of input/output pairs of the given training function and a further input, to produce as output a prediction of the given training function output for the further input.

The neural networks, e.g., in the hardware metric predictor or in a neural network designed using a hardware metric predictor, may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

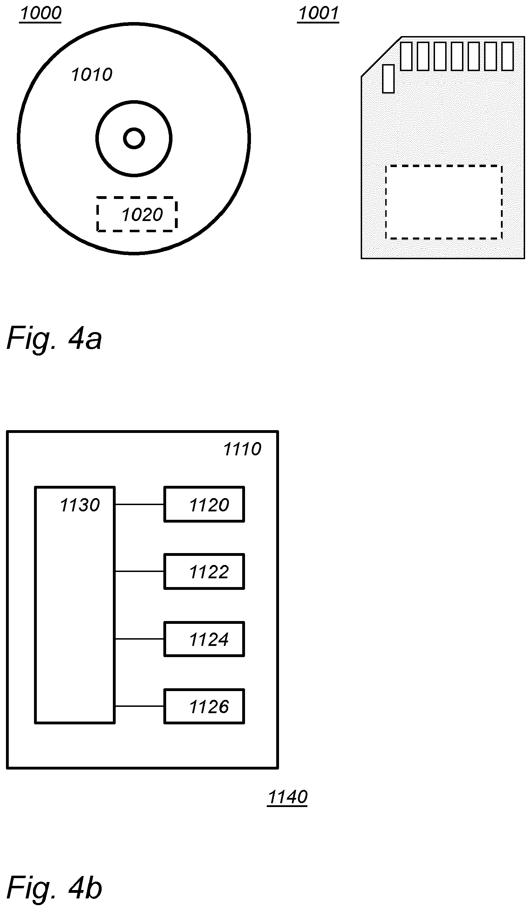

**Figure 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a training, design and/or neural network method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said a training and/or controlling method.

**Figure 4b** shows in a schematic representation of a processor system 1140 according to an embodiment of a training, design and/or neural network system. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the training and/or controlling system or device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It will be apparent that various information described as stored in the storage 1122. Various other arrangements will be apparent. Further, the memory 1122 may be considered to be "non-transitory machine-readable media." As used herein, the term "non-transitory" will be understood to exclude transitory signals but to include all forms of storage, including both volatile and non-volatile memories.

While device 1100 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1100 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A training method (500) for training a hardware metric predictor, the hardware metric predictor being configured to receive as input a query description of a neural network architecture and a ground truth set, the hardware metric predictor being configured to produce as output a predicted hardware metric predicted to be incurred by a neural network corresponding to the query description when run on the target hardware, the ground truth set comprising a number of pairs, each pair comprising a ground truth description of a neural network architecture and a ground truth hardware metric incurred by a neural network corresponding to the ground truth description when run on a target hardware, the method comprising
- obtaining (510) multiple different training functions, a training function receiving as input a training description of a neural network architecture and generating as output a value dependent upon said input,
- iterating (520) over the multiple different training functions to train the hardware metric predictor, comprising
- given a training function for training the hardware metric predictor, training (530) the hardware metric predictor to, given as training input a number of input/output pairs of the given training function and a further input, to produce as output a prediction of the given training function output for the further input.

2. A training method as in Claim 1, wherein the training function is configured to receive as input a description of a neural network architecture, the further input comprises a further description of a neural network architecture.

3. A training method as in Claim 2, wherein training the hardware metric predictor comprises
- computing the output value of the given training function applied to multiple training descriptions of a neural network architecture,
- constructing the training input for the hardware metric predictor, the training input comprising a sequence of pairs of a training description of a neural network architecture, and the corresponding computed output value, and the further input comprising a description of a neural network architecture,
- constructing a training output for the hardware metric predictor, the training output comprising the corresponding computed output value for the at least one further training description of a neural network architecture.
- training the hardware metric predictor on the training input and the training output.

4. A neural network design method, comprising
- obtaining a target hardware metric,
- sampling multiple candidate neural network architectures,
- predicting the hardware metric of the multiple candidate neural network architectures with a hardware metric predictor trained according to any one of Claims 1-3,
- selecting a neural network architecture from the multiple candidate neural network architecture using the predicted hardware metrics and the target hardware metric.

5. A neural network design method as in Claim 4, comprising
- obtaining a target accuracy metric,
- predicting the accuracy metric of the multiple candidate neural network architectures with an accuracy metric predictor,
- selecting the neural network architecture further using the predicted accuracy metrics and the target accuracy metric.

6. A neural network method, comprising
- obtaining sensor values from one or more sensors combined with a controllable technical system, e.g., the system being any one from the group: a smart sensor, a camera, a domestic appliance, and a power tool,
- applying a neural network to the obtained sensor values, the neural network being designed according to a neural network design method as in any one of Claims 4-5, the neural network being configured to produce a control parameter for controlling the controllable technical system
- the neural network being comprised in embedded computation hardware of the controllable technical system, the controllable technical system being configured to apply the control parameter to control the controllable technical system.

7. A neural network debugging method, comprising
- measuring a hardware metric for a neural network architecture running on the target hardware,
- comparing the measured hardware metric with a predicted hardware metric, predicted by a hardware metric predictor trained according to any one of Claims 1-3,
- detecting an anomaly if a difference in the compared metrics exceeds a threshold.

8. A method as in any one of the preceding claims, wherein the hardware metric predictor comprises a neural network, in particular a transformer neural network.

9. A method as in any one of the preceding claims, wherein the hardware metric comprises any one from the group: memory usage, energy consumption, and latency.

10. A method as in any one of the preceding claims, wherein
- at least one of the training functions is a parameter-free model applied to the training description of the neural network architecture, and/or
- at least one of the training functions is any one of: a number of parameters of the neural network architecture, a number of layers of the neural network architecture, a number of layers of the neural network architecture of a particular type, e.g., fully connected, convolutional, ReLu, etc., a number of activations in the neural network architecture, a number of multiply-accumulate operations (MACs), and any combination of the above, and/or
- at least part of the training functions are correlated with the hardware metric.

11. A method as in any one of the preceding claims, wherein at least a part of the multiple different training functions are functions according to a same parametrized class of functions, obtaining multiple different training functions comprises sampling a parametrization, and obtaining a training function from the parametrized class of functions according to the sampled parametrization.

12. A method as in Claim 11, wherein the parametrized class of functions comprises
- a parametrized class of polynomials, and/or
- a parametrized class of neural networks, and/or
- a parametrized class of graph neural networks

13. A method as in any one of the preceding claims, wherein at least a part of the multiple different training functions are discontinuous in at least part of the training description of the neural network architecture.

14. A method as in any one of the preceding claims, wherein the output values of at least a part of the multiple different training functions are obtained from hardware simulation software configured to run a neural network according to the training description of a neural network architecture, and/or from running the neural network according to the training description of a neural network architecture on physical hardware possibly different from the target hardware.

15. A transitory or non-transitory computer readable medium (1000) comprising data (1020) representing instructions, which when executed by a processor system, cause the processor system to perform the method according to any one of the preceding claims.

16. A system comprising: one or more computers/processors; and one or more storage devices storing instructions that, when executed by the one or more computers/processors, cause the one or more computers/processors to perform operations according to any one of claims 1-14.

17. A dishwasher comprising a turbidity sensor, a neural network designed according to a neural network design method as in any one of Claims 4-5 and configured to receive at least a value measured by the turbidity sensor and to produce at least one of a time and temperature of a cleaning process of the dishwasher, the dishwasher being configured to use the generated time and/or temperature of the cleaning process.

## Amended claims

### Amended claims in accordance with Rule 137(2) EPC.

1. A method (500) a hardware metric predictor, the hardware metric representing the cost of running a particular neural network architecture on target hardware, the hardware metric predictor being configured to receive as input a query description of a query neural network architecture and a ground truth set, the hardware metric predictor being configured to produce as output a predicted hardware metric predicted to be incurred by the neural network corresponding to the query description when run on the target hardware, the ground truth set comprising a number of pairs, each pair comprising a ground truth description of a ground truth neural network architecture and a ground truth hardware metric incurred by the neural network corresponding to the ground truth description when run on the target hardware, the method comprising
- training the hardware metric predictor, comprising
- obtaining (510) multiple different training functions, a training function receiving as input a training description of a neural network architecture and generating as output a value dependent upon said input,
- iterating (520) over the multiple different training functions, comprising
- given a training function of the multiple different training functions for training the hardware metric predictor, training (530) the hardware metric predictor to, given as training input a number of input/output pairs of the given training function and a further input, to produce as output a prediction of the given training function output for the further input, the further input comprising a further description of a neural network architecture, and
- the method further comprising neural network designing, comprising
- sampling multiple candidate neural network architectures,
- predicting the hardware metric of the multiple candidate neural network architectures with the trained hardware metric predictor,
- selecting a neural network architecture from the multiple candidate neural network architecture using the predicted hardware metrics.

2. A training method as in Claim 1, wherein training the hardware metric predictor comprises
- computing the output value of the given training function applied to multiple training descriptions of a neural network architecture,
- constructing the training input for the hardware metric predictor, the training input comprising a sequence of pairs of a training description of a neural network architecture, and the corresponding computed output value, and the further input comprising a description of a neural network architecture,
- constructing a training output for the hardware metric predictor, the training output comprising the corresponding computed output value for the at least one further training description of a neural network architecture.
- training the hardware metric predictor on the training input and the training output.

3. A method as in Claim 1, comprising
- obtaining a target accuracy metric,
- predicting the accuracy metric of the multiple candidate neural network architectures with an accuracy metric predictor,
- selecting the neural network architecture further using the predicted accuracy metrics and the target accuracy metric.

4. A method as in any one of the preceding claims, wherein the hardware metric predictor comprises a neural network, in particular a transformer neural network.

5. A method as in any one of the preceding claims, wherein the hardware metric comprises any one from the group: memory usage, energy consumption, and latency.

6. A method as in any one of the preceding claims, wherein
- at least one of the training functions is a parameter-free model applied to the training description of the neural network architecture, and/or
- at least one of the training functions is any one of: a number of parameters of the neural network architecture, a number of layers of the neural network architecture, a number of layers of the neural network architecture of a particular type, e.g., fully connected, convolutional, ReLu, etc., a number of activations in the neural network architecture, a number of multiply-accumulate operations (MACs), and any combination of the above, and/or
- at least part of the training functions are correlated with the hardware metric.

7. A method as in any one of the preceding claims, wherein at least a part of the multiple different training functions are functions according to a same parametrized class of functions, obtaining multiple different training functions comprises sampling a parametrization, and obtaining a training function from the parametrized class of functions according to the sampled parametrization.

8. A method as in Claim 7, wherein the parametrized class of functions comprises
- a parametrized class of polynomials, and/or
- a parametrized class of neural networks, and/or
- a parametrized class of graph neural networks

9. A method as in any one of the preceding claims, wherein at least a part of the multiple different training functions are discontinuous in at least part of the training description of the neural network architecture.

10. A method as in any one of the preceding claims, wherein the output values of at least a part of the multiple different training functions are obtained from hardware simulation software configured to run a neural network according to the training description of a neural network architecture, and/or from running the neural network according to the training description of a neural network architecture on physical hardware possibly different from the target hardware.

11. A transitory or non-transitory computer readable medium (1000) comprising data (1020) representing instructions, which when executed by a processor system, cause the processor system to perform the method according to any one of the preceding claims.

12. A system comprising: one or more computers/processors; and one or more storage devices storing instructions that, when executed by the one or more computers/processors, cause the one or more computers/processors to perform operations according to any one of claims 1-10.
